# EUROPÄISCHE PATENTSCHRIFT

(11) **EP 2 168 661 B1**
(45) Veröffentlichungstag und Bekanntmachung des Hinweises auf die Patenterteilung: **06.07.2011**
(21) Anmeldenummer: 09171038.4
(22) Anmeldetag: 23.09.2009
(51) Int. Cl.: B01D 53/40, B01D 53/94, F02M 25/07

(54) **Vorrichtung und Verfahren zur Neutralisation von saurem Kondensat in einem Kraftfahrzeug**
Device and method for neutralising acidic condensate in a motor vehicle
Dispositif et procédé de neutralisation de condensat acide dans un véhicule automobile

(30) Priorität: 30.09.2008 DE 102008049625
(43) Veröffentlichungstag der Anmeldung: 31.03.2010
(73) Patentinhaber: MANN + HUMMEL GMBH, 71638 Ludwigsburg (DE)
(72) Erfinder: Fasold, Michael, 71549 Auenwald (DE); Traichel, Dirk, 74321 Bietigheim-Bissingen (DE)

(56) Entgegenhaltungen:
- WO-A2-2004/011784
- WO-A2-2009/099528
- DE-A1-102005 050 133
- US-A1- 2007 193 270

## Beschreibung

### Gebiet der Erfindung

Die vorliegende Erfindung betrifft allgemein Verbrennungsmotoren. Insbesondere betrifft die vorliegende Erfindung Verbrennungsmotoren mit einer Abgasrückführungseinrichtung. Ganz speziell betrifft die Erfindung die Neutralisation von saurem Kondensat in einem Fahrzeug mit einem solchen Verbrennungsmotor mit Abgasrückführung.

### Hintergrund der Erfindung, Stand der Technik

Zur Erreichung der sich weltweit verschärfenden Abgasgesetzgebung bei Dieselfahrzeugen sind umfangreiche inner- und außermotorische Maßnahmen notwendig. Dazu zählt beispielsweise die gekühlte Abgasrückführung (AGR), welche eine wesentliche Reduzierung der Stickoxidemissionen ermöglicht. Eine Realisierung der AGR kann dabei in einem konventionellen Hochdruck-AGR-Kreislauf oder in einem Niederdruck-AGR-Kreislauf erfolgen. Im letzteren Fall wird ein Teil des Abgases nach der Turbine und dem Partikelfilter entnommen, zurückgeführt und mit der Frischluft vor dem Verdichter gemischt.

Im Motor entsteht durch die Verbrennung Wasser, welches in Form von Wasserdampf das Abgassystem verlässt. Dabei entstehen z.B. bei einem LKW mehrere m³ Wasser auf 100.000 km. Durch Einsatz der Abgasrückführung wird eine Reduzierung der NOₓ-Werte erreicht. Derzeit wird vorwiegend das Hochdruck-AGR-System eingesetzt, was gegenüber dem Niederdruck-AGR-System jedoch einige Nachteile aufweist. Bei Einsatz von Niederdruck-AGR-Systemen wird, wie bereits erwähnt, ein Teil des Abgases nach dem Dieselpartikelfilter einem Abgaskühler zugeführt, welcher das bereits entspannte Abgas weiter abkühlt. Durch den AGR-Kühler wird eine Abkühlung unterhalb des Taupunktes (80-140°C) der im Abgas vorhandenen wasserlöslichen Medien (H₂SO₄, H₂SO₃, HNO₃, HCl und H₃PO₄) erreicht, was zur Bildung eines sauren Kondensats führt. Aufgrund des sauren Kondensats (pH ca. 1,5-5) sind alle nachfolgenden Bauteile einschließlich des AGR-Kühlers starker Korrosion ausgesetzt, was bis zu deren Zerstörung führen kann, wenn sie nicht aus entsprechend hochwertigen Materialien hergestellt sind oder aufwändig beschichtet werden.

Demzufolge ist es also notwendig, das entstehende saure Kondensat zu neutralisieren, um die Lebensdauer der Bauteile zu erhöhen.

In der US-A-5,857,324 wird eine Vorrichtung und ein Verfahren zur Entfernung von Gasen und teilchenförmigem Material aus Automobilabgasen beschrieben. Die Vorrichtung beinhaltet einen mit einem Automobilabgassystem verbundenen Wärmetauscher zur Kühlung von Abgas und zur Kondensierung zumindest eines Teils des Abgases zu einem flüssigen Kondensat. Das Kondensat und zumindest ein Teil des teilchenförmigen Materials wird von den nicht kondensierten Gasen getrennt, und das Kondensat wird in einen mit Flüssigkeit gefüllten Tank geführt. In einem ersten chemischen Reaktor wird das Kondensat behandelt, wobei in der Flüssigkeit vorhandene Säuren bspw. mit einem Alkalimetallhydroxid neutralisiert werden.

Die US 2004/0050373A1 offenbart eine Vorrichtung und ein Verfahren zur Verbesserung der Lebensdauer von Schmieröl in einem Dieselmotor mit AGR-System. Hierzu wird ein chemischer Filter entweder im AGR-Strom oder in der Nähe des Ansaugstutzens platziert, der die sauren Bestandteile aus dem AGR-Strom herausfiltert, bevor sie in den Ansaugstutzen eindringen können. Als Adsorbenzien werden dabei Metallcarbonate, Metalloxide, Metallhydroxide, Aktivkohle, Ionenaustauschermaterialien und andere natürliche Adsorbenzien wie bspw. Kalkstein verwendet.

WO2009099528 und US2007193270 beschreiben je ein SCR-System mit einer AGR, sowie einem AGR-Kühler zur Abkühlung des rückgeführten Abgasstroms.

Nachteilig an diesen Lösungen ist, dass bei der Neutralisation Feststoffe wie bspw. Calciumsulfat und dgl. entstehen, die separat entsorgt werden müssen. Des weiteren ist deren Wirkungsweise lokal beschränkt, d.h., die Reaktion findet bspw. nur in der Kalkschüttung statt, Wenn die Neutralisation danach nicht vollständig erfolgt, liegt immer noch ein saures Medium vor. Je nach zu erwartender Kondensatmenge sind große Mengen Harz (Ionenaustauscher) erforderlich. Weiterhin ist für die chemische Neutralisation gerade in Bezug auf schwache Säuren ein erheblicher Zeitaufwand erforderlich, um eine ausreichende Neutralisation (pH 6-7) zu erhalten.

Da nicht alle Salze der vorhandenen Säuren als Feststoff ausfallen, können die wasserlöslichen Salze im System weiterwandern, sich auf temperaturbelasteten Bauteilen im Verbrennungsmotor (Ventile, bewegliche Teile, etc.) absetzen und einen entsprechenden Belag bilden (Salzschicht). Somit würde zwar eine Neutralisation erreicht, es bleibt jedoch den Nachteil von möglichen Ablagerungen an heißen Oberflächen, an denen das Wasser verdampft und die Salze als Ablagerung verbleiben.

### Zusammenfassung der Erfindung

Es ist daher die Aufgabe der vorliegenden Erfindung, eine Vorrichtung und ein Verfahren zur Neutralisation von saurem Kondensat in Verbrennungsmotoren mit AGR-System zur Verfügung zu stellen, die die Nachteile des Standes der Technik vermeiden.

Es ist eine weitere Aufgabe der vorliegenden Erfindung, eine solche Vorrichtung und ein entsprechendes Verfahren bereit zu stellen, deren Wirkungsweise schnell, zuverlässig und mit geringem Platzbedarf verbunden ist.

Diese und weitere Aufgaben werden durch die Vorrichtung nach Anspruch 1 und das Verfahren nach Anspruch 5 gelöst.

Weitere vorteilhafte Ausgestaltungen sind in den Unteransprüchen enthalten.

### Kurze Beschreibung der Zeichnungen

Die Erfindung wird im folgenden anhand der Zeichnungen näher erläutert. Dabei zeigt
- Fig. 1: eine schematische Ansicht einer Hochdruck-Abgasrückführung nach dem Stand der Technik;
- Fig. 2: eine schematische Ansicht einer Niederdruck-Abgasrückführung nach dem Stand der Technik;
- Fig. 3: schematisch den Aufbau eines Feststoff-SCR-Systems nach dem Stand der Technik; und
- Fig. 4: schematisch die Wirkungsweise der erfindungsgemäßen Vorrichtung.

### Detaillierte Beschreibung der Ausführungsbeispiele

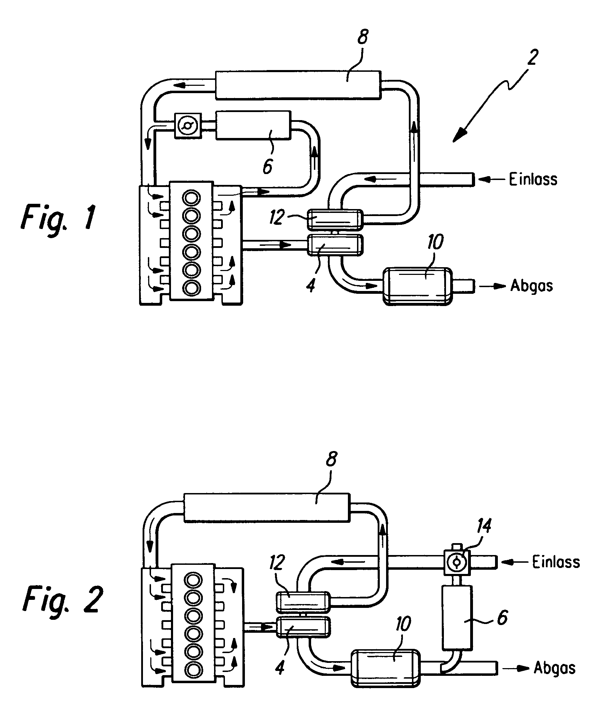

Fig. 1 zeigt schematisch den Aufbau einer Hochdruck-Abgasrückführung (Hochdruck-AGR) 2 nach dem Stand der Technik. Hierbei wird ein Teil des Abgases vor der Turbine 4 des Abgasturboladers entnommen, im Abgasrückführungskühler (AGR-Kühler) 6 gekühlt und danach der Frischluft nach dem luftgekühlten Ladeluftkühler 8 beigemischt. In diesem Fall befindet sich das in die verdichtete Ladeluft rückgeführte Abgas auf einem hohen Druckniveau, weshalb man von einer Hochdruck-Abgasrückführung spricht.

Wird, wie in Fig. 2 gezeigt, das Abgas erst nach dem Dieselpartikelfilter 10 und der Turbine 4 entnommen, spricht man von einer Niederdruck-Abgasrückführung (Niederdruck-AGR), da in diesem Fall das Abgas bereits in der Turbine 4 entspannt wurde. Auch dabei wird das rückgeführte Abgas gekühlt, anschließend aber der Frischluft vor dem Verdichter 12 des Abgasturboladers und damit auch vor dem Ladeluftkühler 8 beigemischt. Wie in Fig. 2 gezeigt, kann eine zusätzliche AGR-Drosselklappe 14 eingesetzt werden, die bei geringen Abgasmassenströmen das Druckgefälle zwischen Abgas- und Ansaugleitung erhöht und dadurch die AGR-Rate steigert.

Das in den AGR-Kühler eingeleitete Abgas ist je nach Betriebspunkt des Verbrennungsmotors unterschiedlich mit Feuchtigkeit beladen. Durch die Abkühlung im AGR-Kühler bildet sich Kondensat, das aufgrund der Bestandteile im Kraftstoff und Motoröl Säure (H₂SO₄, HCl, HNO₃, H₃PO₄, etc.) enthält. Je nach Kraftstoffqualität kann dabei der pH-Wert des Kondensats stark schwanken. Darin liegt auch die Schwierigkeit bisheriger Systeme, bei denen die erforderlichen Mengen zur Neutralisation nicht zuverlässig vorausgesagt werden können und gleichzeitig bei Einsatz von bspw. CaCO₃ noch Feststoffe bei der Neutralisation entstehen, welche entsprechend behandelt werden müssen.

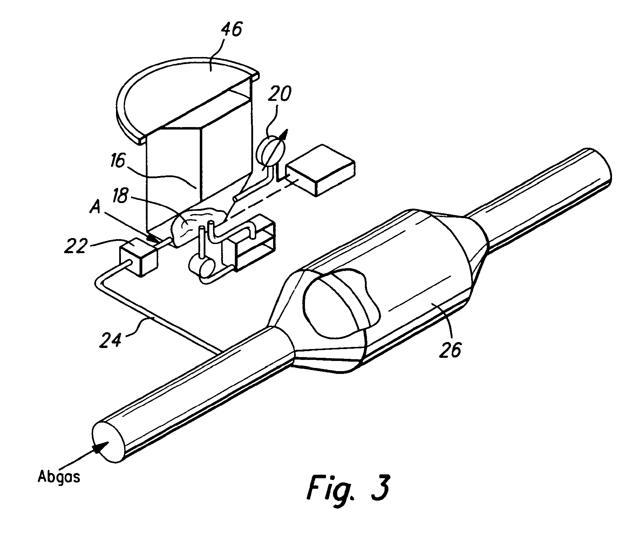

Erfindungsgemäß wird nun eine Lauge bzw. ein Gas, welches in Kontakt mit Wasser eine Lauge bildet, wie z.B. Ammoniak, zusammen mit den noch heißen Abgasen in den AGR-Kühler eingeleitet. Bei der Kondensation der Säuren im bzw. nach dem AGR-Kühler kondensiert gleichzeitig eine entsprechende Lauge aus und die Neutralisation wird somit im Augenblick der Kondensatbildung durchgeführt. Dieses System hat den Vorteil, dass die Neutralisation bereits im Moment der Kondensation dicht unterhalb des Taupunktes abläuft und somit ein Säureangriff auf die Bauteile (Kühler, Leitungen, Lader etc) vermieden wird. Weiterhin werden bei Einsatz von z.B. Ammoniak keine wasserunlöslichen Salze gebildet, die in einem nachfolgenden Prozessschritt herausgefiltert werden müssen. Bezüglich der Bereitstellung eines Gases wie Ammoniak kann auf bestehende Feststoff-SCR-Systeme unter Verwendung von z.B. Ammoniumcarbamat zurückgegriffen werden, oder es kann z.B. Ammoniak als Gas zum Einsatz kommen. Mit SCR (selective catalytic reduction) bezeichnet man die Technik der selektiven katalytischen Reduktion von Stickoxiden in Abgasen von Motoren. Die chemische Reaktion der Reduktion ist selektiv, d.h., es werden nicht alle Abgaskomponenten reduziert, sondern nur die Stickoxide (NO, NO₂). Der für dieses Verfahren benötigte Ammoniak wird nicht direkt, sondern meist in Form einer 32,5%igen wässrigen Harnstofflösung, von der Industrie einheitlich als AdBlue^{®} bezeichnet. Eine andere Möglichkeit ist das sogenannte Feststoff-SCR-System, wie es in Fig. 3 schematisch dargestellt ist. In diesem System wird pulverförmiges Ammoniumcarbamat 16 als Ammoniakquelle verwendet wird. Zur Sublimation des Feststoffes wird ein flüssiges Wärmeträgermedium 18 im geschlossenen Kreislauf elektrisch erwärmt und über eine Düse von unten direkt gegen das Ammoniumcarbamat gespritzt. Hierbei entsteht aus dem sublimierten Ammoniumcarbamat ein Gasgemisch aus Ammoniak und Kohlendioxid, wodurch der Druck im Raum unterhalb des Feststoffes ansteigt. Dieser Gasdruck wird mittels eines Drucksensors 20 erfasst und auf einen vorgegebenen Schwellwert eingeregelt, um ein treibendes Druckgefälle zum Abgasstrang sicherzustellen. Die Dosierung des Ammoniak/Kohlendioxid-Gasgemisches erfolgt über ein proportionales Dosierventil 22. Die gasförmigen Reduktionsmittel (NH₃ und CO₂) werden über eine Versorgungsleitung 24 in den SCR-Katalysator 26 geleitet.

Die Schnittstelle zur erfindungsgemäßen Eindosierung in den AGR-Kühler liegt hierbei zwischen dem Dosierventil 22 und dem das Ammoniumcarbamat enthaltenden Behälter 46 (Punkt A in Fig. 3).

Die Löslichkeit von Ammoniak in Wasser ist als sehr gut zu bezeichnen. Da in der Regel, insbesondere beim Niederdruck-AGR-System, die Kondensation nach dem AGR-Kühler noch nicht vollständig abgeschlossen sein muss (d.h., je nach Leistungsspektrum des AGR-Kühlers kann eine noch weitere Abkühlung als im AGR-Kühler selbst z.B. im Ladeluftkühler bzw. nach dem Ladeluftkühler erfolgen), kann sich auch nach dem Verdichter und dem Ladeluftkühler noch Kondensat bilden. Durch das erfindungsgemäße System wird jedoch die Neutralisation auch in weiter entfernten Positionen noch gewährleistet, da ein Teil des Gases, wie z.B. Ammoniak, durch den Luftstrom mitgetragen wird und entsprechend später bei der Kondensation von Wasser als basische Ammoniaklösung zur Verfügung steht. Somit können die an diesen Stellen anfallenden Säuren ebenfalls neutralisiert werden.

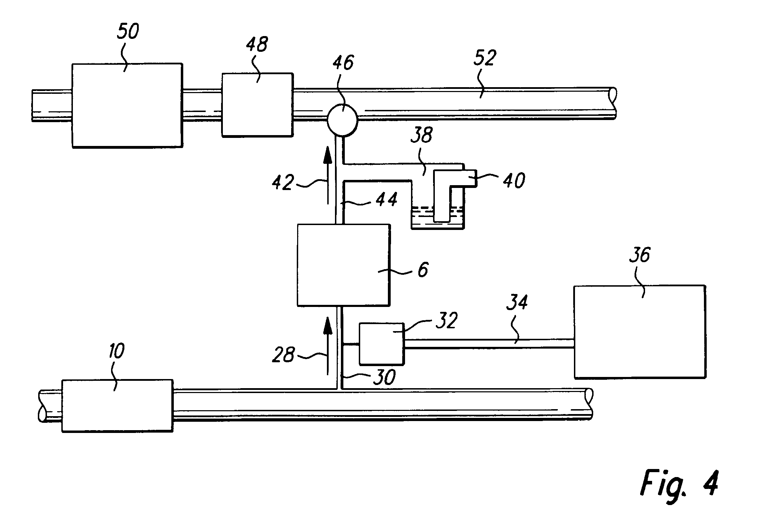

Fig. 4 zeigt schematisch den Aufbau der erfindungsgemäßen Vorrichtung am Beispiel eines Niederdruck-AGR-Systems, bei dem das Abgas erst nach dem Dieselpartikelfilter 10 und der Turbine (nicht gezeigt) entnommen wird. Da bei der vorliegenden Erfindung im Gegensatz zur Verwendung von Ionenaustauschermaterialien keine Temperaturbeschränkung bzgl. des Funktionsbereichs des Systems besteht, ist die Erfindung jedoch nicht auf Niederdruck-AGR-Systeme beschränkt, sondern kann auch bei Hochdruck-AGR-Systemen angewendet werden.

Nach der Entnahme des Abgases (Pfeil 28) über die Leitung 30 hinter dem Dieselpartikelfilter 10 wird dem Abgasstrom eine basische Substanz zugegeben. Der Ammoniak wird bereitgestellt aus direkten Speichermedien (NH₃-Gas), Adsorptions- bzw. Desorptionsmedien, oder aus der Thermolyse/Hydrolyse fester bzw. flüssiger Hilfsstoffe. Bei der Verwendung von Ammoniak verbindet sich dieses mit dem in dem Abgas vorhandenen Wasser und wird zusammen mit dem noch heißen Abgas in den AGR-Kühler 6 eingeleitet. Somit findet die Neutralisation des sich durch die Abkühlung des Abgasstromes bei der Einführung in den AGR-Kühler 6 bildenden sauren Kondensats im Augenblick der Kondensatbildung selbst statt. Dadurch wird ein Säureangriff auf die Bauteile (Kühler, Leitungen, Lader) vermieden. Die Verwendung von Ammoniak hat außerdem den Vorteil, dass sich keine wasserunlöslichen Salze bilden, die in einem nachfolgenden Prozessschritt herausgefiltert werden müssten.

Die Zugabe der basischen Substanz erfolgt durch ein vor dem AGR-Kühler 6 angeordnetes Gas-Dosiersystem 32 z.B. ein gesteuertes elektromagnetisches Einspritzventil über die Leitung 34. Das Ammoniakgas kann dabei aus vorhandenen, bekannten SCR-Systemen 36 entnommen werden. Dabei ist gerade bei Einsatz von Feststoff-SCR (vgl. Fig. 3) gegenüber der AdBlue^{®}-Lösung kein weiterer Umsetzungsprozess erforderlich, da bei AdBlue^{®} katalytische Umsetzungsprozesse zur Darstellung des Ammoniaks erforderlich sind. Generell kann jedoch auch auf eine separate Versorgung in verschiedenen Speichermedien über z.B. feste oder flüssige Hilfsstoffe oder direkt in Gasflaschen zurückgegriffen werden.

Um eine entsprechende Dosierung der Base zu ermöglichen, ist in einer nach dem AGR-Kühler 6 angebrachten Wasserfalle 38 ein pH-Sensor 40 angeordnet, welche den vorhandenen pH-Wert des Kondensates misst und dies einer entsprechenden Auswertelogik (nicht gezeigt) übermittelt. Die Auswertelogik berechnet sodann die erforderliche Menge an Ammoniak, die dem Dosiersystem 32 zugeführt werden muss. Bei Anfall des Kondensats verbindet sich der Ammoniak aufgrund der großen Affinität umgehend mit dem Wasser und kann die im Kondensat vorliegenden Säuren direkt während der Kondensation neutralisieren. Dabei ist die Wirkung des Ammoniakgases nicht örtlich eingeschränkt, die Wirkung bleibt entlang der Leitung 30 so lange erhalten, bis der Ammoniak entsprechend umgesetzt ist.

Nach Verlassen des AGR-Kühlers 6 wird der abgekühlte Abgasstrom (Pfeil 42) über die Leitung 44 zu einem Ventil 46 geleitet, das ihn anschließend wieder dem Verdichter 48 und dem Ladeluftkühler 50 zuleitet.

Bei Einsatz mehrerer pH-Sensoren kann das vorhandene Säurepotential entlang der Ansaugstrecke überwacht werden und dadurch eine bessere Dosierung erzielt werden. Weitere Positionen für pH-Sensoren können Ladeluftkühler 50, Saugrohr 52 bzw. die entsprechenden Verbindungsleitungen sein.

Es ist nicht erforderlich, eine genauen pH-Wert von 7 einzustellen Vielmehr reicht es aus, wenn ein pH- Wert in einer Bandbreite von z.B. 6-8 eingehalten wird, was sicherheitstechnisch als völlig unkritisch einzustufen ist.

Das vom AGR-Strom unter Verwendung z.B. eines Zyklons abgeschiedene Wasser (Kondensat) kann nach dessen Neutralisation im Bypass-System entweder nach außen ausgetragen oder je nach anfallender Wassermenge vollständig oder teilweise dem Ansaugsystem zugeführt werden. Dabei kann das Wasser z. B. über eine Pumpe nach dem Verdichter 48 und Ladeluftkühler 50 zugeführt bzw., falls möglich, ohne Pumpe gezielt durch den Verdichter 48 hindurchgeleitet werden. Da der Verdichter durch Wassertropfen beschädigt werden kann, ist eine Einleitung nach den Verdichter bevorzugt. Eine weitere Möglichkeit besteht darin, das neutralisierte Kondensat für die direkte Wassereinspritzung zur Reduzierung der Brennraumtemperatur und somit der NOₓ-Werte zu verwenden.

Ein weiterer Vorteil dieser Vorrichtung liegt darin, dass die zur Neutralisation erforderlichen Stoffe in hoch konzentrierter Form vorliegen und sich dadurch eine Platz sparende und bedarfsgerechte Lösung ergibt.

Außerdem entstehen bei der erfindungsgemäßen Lösung nur wasserlösliche Reaktionsprodukte und keine Feststoffe.

Des weiteren ist vorteilhaft, dass kein zusätzlicher Druckverlust durch eingebrachte Filtersysteme zur Neutralisation und Abscheidung umgesetzter Spaltprodukte entsteht und kein Nebenstromsystem erforderlich ist, in dem die Neutralisations- und Filtereinheit untergebracht ist, um den gesamten Druckverlust in der Hauptleitung bis auf den durch die Wasserabscheidung (z.B. durch ein Zyklon) generierten Druckverlust so gut wie möglich zu vermeiden.

## Patentansprüche

1. Vorrichtung zur Neutralisation eines sauren Kondensats in einem Verbrennungsmotor mit Abgasrückführung, wobei die Abgasrückführung einen Abgasrückführungskühler (6) zur Abkühlung des heißen Abgasstroms (28) aufweist, wobei vor dem Abgasrückführungskühler (6) ein Dosiersystem (32) zur Eindosierung einer basischen Substanz in den heißen Abgasstrom (28) angeordnet ist, **dadurch gekennzeichnet, dass** hinter dem Abgasrückführungskühler (6) eine Wasserfalle (38) mit einem darin angeordneten pH-Sensor (40) angebracht ist.

2. Vorrichtung nach Anspruch 1, **dadurch gekennzeichnet, dass** die basische Substanz Ammoniak ist.

3. Vorrichtung nach einem der Ansprüche 1 bis 2, **dadurch gekennzeichnet, dass** die basische Substanz aus einem dem Verbrennungsmotor angeschlossenen SCR-Katalysatorsystem (36) zuführbar ist.

4. Vorrichtung nach einem der vorstehenden Ansprüche, **dadurch gekennzeichnet, dass** eine Mehrzahl von pH-Sensoren entlang einer Ansaugstrecke des Verbrennungsmotors angeordnet ist.

5. Verfahren zur Neutralisation eines sauren Kondensats in einem Verbrennungsmotor mit Abgasrückführung, wobei die Abgasrückführung einen Abgasrückführungskühler (6) zur Abkühlung des heißen Abgasstroms (28) aufweist, wobei der heiße Abgasstrom (28) zusammen mit einer basischen Substanz in den Abgasrückführungskühler (6) eingeleitet wird, **dadurch gekennzeichnet, dass** der aktuelle pH-Wert des Kondensats mittels eines in einer dem Abgasrückführungskühler (6) nachgeschalteten Wasserfalle (38) angebrachten pH-Sensors (40) ermittelt wird.

6. Verfahren nach Anspruch 5, **dadurch gekennzeichnet, dass** die basische Substanz Ammoniak ist.

7. Verfahren nach Anspruch 6, **dadurch gekennzeichnet, dass** der Ammoniak aus direkten Speichermedien, durch Adsorptions- oder Desorptionsmedien oder durch Thermolyse/Hydrolyse fester bzw. flüssiger Hilfsstoffe zugeführt wird.

8. Verfahren nach einem der Ansprüche 6 oder 7, **dadurch gekennzeichnet, dass** die basische Substanz aus einem in dem Verbrennungsmotor vorhandenen SCR-Katalysatorsystem (36) zugeführt wird.

9. Verfahren nach einem der Ansprüche 6 bis 8, **dadurch gekennzeichnet, dass** eine Mehrzahl von pH-Sensoren den pH-Wert des Kondensats entlang einer Ansaugstrecke des Verbrennungsmotors überwacht.

## Claims

1. Device for neutralizing an acid condensate in an internal combustion engine with exhaust gas recirculation, the exhaust gas recirculation featuring an exhaust gas recirculation cooler (6) for cooling the hot exhaust-gas flow (28), a metering system (32) for adding a metered amount of an alkaline substance into the hot exhaust-gas flow (28) being disposed upstream of the exhaust gas recirculation cooler (6), **characterized in that** a water trap (38) with a pH-sensor (40) disposed therein being mounted downstream of the exhaust gas recirculation cooler (6).

2. Device according to claim 1, **characterized in that** the alkaline substance is ammonia.

3. Device according to one of the claims 1 to 2, **characterized in that** the alkaline substance can be supplied from an SCR catalytic system (36) connected to the internal combustion engine.

4. Device according to one of the above claims, **characterized in that** a multitude of pH-sensors is disposed along an intake line of the internal combustion engine.

5. Method for neutralizing an acid condensate in an internal combustion engine with exhaust gas recirculation, the exhaust gas recirculation featuring an exhaust gas recirculation cooler (6) for cooling the hot exhaust-gas flow (28), the hot exhaust-gas flow (28) being supplied together with an alkaline substance into the exhaust gas recirculation cooler (6), **characterized in that** the current pH-value of the condensate is determined by means of a pH-sensor (40) mounted in a water trap (38) disposed downstream of the exhaust gas recirculation cooler (6).

6. Method according to claim 5, **characterized in that** the alkaline substance is ammonia.

7. Method according to claim 6, **characterized in that** the ammonia is supplied from direct storage media, via adsorption or desorption media or via thermolysis/hydrolysis of solid and/or liquid auxiliary substances.

8. Method according to one of the claims 6 to 7, **characterized in that** the alkaline substance is supplied from an SCR catalytic system (36) existing in the internal combustion engine.

9. Method according to one of the claims 6 to 8, **characterized in that** a multitude of pH-sensors monitors the pH-value of the condensate along an intake line of the internal combustion engine.

## Revendications

1. Dispositif de neutralisation d'un condensat acide dans un moteur à combustion interne avec système de recyclage des gaz d'échappement, le système de recyclage des gaz d'échappement présentant un refroidisseur de recyclage des gaz d'échappement (6) servant à refroidir le flux chaud de gaz d'échappement (28), un système de dosage (32) destiné à doser une substance basique dans le flux chaud de gaz d'échappement (28) étant disposé en amont du refroidisseur de recyclage des gaz d'échappement (6), **caractérisé en ce qu'**une trappe d'eau (38) dotée à l'intérieur d'une sonde de pH (40) est placée en aval du refroidisseur de recyclage des gaz d'échappement (6).

2. Dispositif selon la revendication 1, **caractérisé en ce que** la substance basique est de l'ammoniac.

3. Dispositif selon l'une des revendications 1 à 2, **caractérisé en ce que** la substance basique peut être acheminée à partir d'un système de catalyseur SCR (36) raccordé à un moteur à combustion interne.

4. Dispositif selon l'une des revendications précédentes, **caractérisé en ce que** la plupart des sondes de pH sont disposées le long d'un trajet d'aspiration du moteur à combustion interne.

5. Procédé de neutralisation d'un condensat acide dans un moteur à combustion interne avec système de recyclage des gaz d'échappement, le système de recyclage des gaz d'échappement présentant un refroidisseur de recyclage des gaz d'échappement (6) servant à refroidir le flux chaud de gaz d'échappement (28), le flux chaud de gaz d'échappement (28) pouvant être introduit avec une substance basique dans le refroidisseur de recyclage des gaz d'échappement (6), **caractérisé en ce que** le pH actuel du condensat est mesuré au moyen d'une sonde de pH (40) montée dans une trappe d'eau (38) placée en aval du refroidisseur de recyclage des gaz d'échappement (6).

6. Procédé selon la revendication 5, **caractérisé en ce que** la substance basique est de l'ammoniac.

7. Procédé selon la revendication 6, **caractérisé en ce que** l'ammoniac est acheminé à partir d'éléments de stockage directs, à travers des éléments d'adsorption ou de désorption ou par thermolyse/hydrolyse d'agents auxiliaires solides et/ou liquides.

8. Procédé selon l'une des revendications 6 ou 7, **caractérisé en ce que** la substance basique est acheminée à partir d'un système de catalyseur SCR (36) existant dans un moteur à combustion interne.

9. Procédé selon l'une des revendications 6 à 8, **caractérisé en ce que** la plupart des sondes de pH surveillent la valeur pH du condensat le long d'un trajet d'aspiration du moteur à combustion interne.
